Europäisches Patentamt

European Patent Office

Office européen des brevets

(19)

(11) Veröffentlichungsnummer: **0 197 321 B1**

(12) **EUROPÄISCHE PATENTSCHRIFT**

(45) Veröffentlichungstag der Patentschrift: **18.09.91**

(21) Anmeldenummer: **86103098.9**

(22) Anmeldetag: **08.03.86**

(51) Int. Cl.5: **G01C 21/00**, G01C 21/22, G09B 29/10

(54) **Fahrzeugleiteinrichtung.**

(30) Priorität: **02.04.85 DE 3511960**

(43) Veröffentlichungstag der Anmeldung:
**15.10.86 Patentblatt 86/42**

(45) Bekanntmachung des Hinweises auf die
Patenterteilung:
**18.09.91 Patentblatt 91/38**

(84) Benannte Vertragsstaaten:
**DE FR GB IT SE**

(56) Entgegenhaltungen:
**EP-A- 0 027 232**
**EP-A- 0 103 847**
**EP-A- 0 126 915**
**DE-A- 3 429 882**

(73) Patentinhaber: **Adam Opel Aktiengesellschaft**
**Bahnhofsplatz 1 Postfach 1560**
**W-6090 Rüsselsheim(DE)**

(72) Erfinder: **Reck, Lothar, Ing. grad.**
**Keplerring 50**
**W-6090 Rüsselsheim(DE)**

(74) Vertreter: **Bergerin, Ralf, Dipl.-Ing. et al**
**Adam Opel Aktiengesellschaft Bahnhofplatz**
**1 Postfach 17 10**
**W-6090 Rüsselsheim(DE)**

## Beschreibung

**Die Erfindung betrifft eine Fahrzeugleiteinrichtung nach dem Oberbegriff des Patentanspruchs 1.**

Da der heutige Straßenverkehr ständig dichter wird, müssen die Fahrer der einzelnen Fahrzeuge eine stets größer werdende Zahl von Informationen über die Verkehrsdichte, über das Fahrverhalten der anderen Verkehrsteilnehmer, über die Verkehrsführung und -regelung sowie über die gewünschte Fahrstrecke gleichzeitig oder zumindest kurz aufeinanderfolgend verarbeiten. Um die Verkehrssicherheit zu erhöhen, wird daher angestrebt, dem Fahrer eines Fahrzeugs zumindest einen Teil dieser Informationsverarbeitung abzunehmen. Hierzu sind bereits verschiedene Fahrzeugleiteinrichtungen entwickelt worden, die dem Fahrer bei der Auffindung eines individuell gewählten Fahrziels behilflich sind.

Neben Navigationssystemen, die über Funkpeilungen die individuelle Ortbestimmung durchführen und vom jeweiligen Standort die weitere Richtung berechnen und anzeigen und neben Fahrzeugleiteinrichtungen, die ihre Fahrstreckeninformationen mittels fahrbahnseitiger Antennen erhalten, ist aus dem VDI-Bericht Nr. 515, 1984, Seite 95 ein Routenrechner bekannt, in dem das gesamte Bundes- und Autobahnstraßennetz, einschließlich des zugehörigen Ortsregisters fahrzeugintern abgespeichert ist. Der Fahrer muß Standort und Fahrziel in den Routenrechner eingeben, worauf dieser die kürzeste oder die schnellste Fahrstrecke ermittelt und auf Wunsch auch eine bestmögliche Ausweichfahrtstrecke angibt. Der Fahrer kann sich für eine dieser berechneten Fahrtstrecken entscheiden und wird während der Fahrt entsprechend geführt. Vor jedem Abbiegepunkt erhält er die nötigen Fahrtrichtungshinweise.

Obwohl dieser bekannte Routenrechner auf langen Fahrtstrecken den Fahrer weitgehend von der individuellen Suche nach dem richtigen Weg entlastet, ist der Routenrechner nur in dem Gebiet zu verwenden, dessen Straßennetz abgespeichert ist. Verläßt der Fahrer dieses Gebiet, so ist er wieder völlig auf sich selbst gestellt und muß anhand der ihm zur Verfügung stehenden Straßenkarten seinen Weg zusammensuchen. Also gerade dort, wo eine Fahrzeugleiteinrichtung besonders benötigt wird, ist dieser Routenrechner nicht einsetzbar.

Auf der anderen Seite ist der Fahrer eines Fahrzeugs, das mit einem derartigen Routenrechner ausgerüstet ist, auch im dichten Stadtverkehr auf sich selbst gestellt, da Informationen über die einzelnen Ortsnetze nicht im Routenrechner abgespeichert sind. Auch hier ist jedoch eine Fahrzeugleitfunktion besonders erwünscht.

Bei dem elektronischen Verkehrslotsen für Autofahrer, kurz EVA wird das Prinzip der Fahrtstreckenberechnung, wie es vom Routenrechner her bekannt ist, auf den innerstädtischen Bereich angewendet. Das erfordert einen enormen Speicherplatzbedarf im Fahrzeug von ca. 1,5 bis 2,5 Mio. Byte für eine einzige Großstadt. Im innerstädtischen Bereich erhält der Fahrer dann vor jeder Kreuzung entsprechende optische und akustische Hinweise zum Einordnen und Abbiegen. Verläßt der Fahrer jedoch die Stadt deren Stadtplan abgespeichert ist, so ist er bei der Überlandfahrt und in einer anderen Stadt wiederum auf sich selbst angewiesen, oder er muß auch für die fremde Stadt einen entsprechenden elektronischen Stadtplan zur Verfügung haben.

Der auf Seite 96 des VDI-Berichts Nr. 515, 1984 beschriebene Navigationsrechner oder City-Pilot ist überall einsetzbar, da ihm nur die Position des Standorts und des Zielorts eingegeben zu werden brauchen. Aus diesen Daten berechnet der Navigationsrechner den Abstand des Fahrzeugs vom Zielort in Luftlinienentfernung und die dazugehörige Richtung. Während der Fahrt wird der zurückgelegte Weg gemessen und dem Navigationsrechner zugeführt. Die Fahrtrichtungsinformation wird über das Erdmagnetfeld erhalten und von einem um $90°$ versetzten Magnetspulenpaar gemessen. Aus diesen Daten kann der Navigationsrechner dann ständig die Richtung des Ziels und dessen Luftlinienentfernung berechnen.

Die Wahl der Fahrtstrecke muß der Fahrer jeweils im aktuellen Fahrzeugstandort bestimmen. Er wird daher kaum den kürzesten oder schnellsten Weg zum Zielort finden. Ein weiterer Nachteil des Navigationsrechners ist seine geringe Genauigkeit von ca. 3 % der zurückgelegten Wegstrecke, was bereits bei einer Gesamtfahrtstrecke von 100 km eine Abweichung vom Ziel um 3 km bewirkt. Daher ist eine Verwendung des Navigationsrechners nur auf flächenmäßig relativ kleine Gebiete mit dichtem Straßennetz, wie beispielsweise in Städten sinnvoll. Aber auch in diesen Gebieten wird die Brauchbarkeit des Navigationsrechners durch die allgemeine Verkehrsführung durch Linksabbiegerverbote, Einbahnstraßen u.ä. weiter beeinträchtigt.

Ein ähnlicher Navigationsrechner ist aus der eine Navigationshilfe für ein Fahrzeug betreffenden EP 0 103 847 A1 bekannt. Bei dieser Navigationshilfe werden die Koordinatenwerte von Startpunkt und Zielpunkt aus einer entsprechenden Landkarte übernommen und in den Navigationsrechner eingegeben.

Die Eingabe der Start- und Zielkoordinaten, die sowohl als kartesische als auch als Polar-Koordinaten vorgesehen sein können, kann dabei mittels eines Lichtgriffels erfolgen, mit dem entsprechende Strichraster abgefahren werden.

Um eine gewisse Erleichterung zur Erkennung der Fahrstrecke zu schaffen, können die Koordinaten von Zwischenzielen sowie Zusatzinformationen eingegeben werden, die beispielsweise anzeigen, daß eine Einmündung folgt, eine Seitenstraße befahren werden muß oder einen Hinweis auf eine Brücke, Kirche oder ähnliches geben.

Nachteilig bei dieser bekannten Navigationshilfe ist es, daß bestimmte Fahrtstreckeninformationen, insbesondere Hinweise auf die Art einer Richtungsänderung, nur relativ umständlich oder gar nicht eingegeben werden können.

Aus der DE 34 29 882 A1 ist weiter eine Fahrzeugleiteinrichtung bekannt, die eine mit einer Anzeigeeinheit verbundene Steuereinheit aufweist, der von einem Richtungsmesser und einem Fahrstreckensensor die der zurückgelegten Fahrstrecke entsprechenden Daten zugeführt werden. Ferner ist die Steuereinheit mit einer Digitalisiereinheit verbunden, mit der der vorbereitete Fahrtkurs auf einer Landkarte abgetastet wird. Die Digitalisiereinheit besteht dabei aus einem Rahmen, innerhalb dessen eine Führungsschiene in X-Richtung verschiebbar angeordnet ist, auf der eine Abtasteinheit in Y-Richtung verschiebbar geführt ist.

Zusätzlich sind an der Abtasteinheit Eingabetasten vorgesehen, mit der an bestimmten Punkten der Fahrtroute Fahrtrichtungsinformationen eingegeben werden können.

Diese bekannte Digitalisiereinheit zur Eingabe der Fahrstrecke ist verhältnismäßig umständlich zu bedienen, da insbesondere an Abbiegepunkten die Fahrtrichtung stets von Hand eingegeben werden muß. Außerdem ist die Digitalisiereinheit verhältnismäßig groß und sperrig.

Aus der EP-A-0 126 915 ist eine Informationseingabe für eine Navigationseinrichtung für Straßenfahrzeuge bekannt, die eine Lesefolie mit linearen Strichrastern aufweist, um die X-Y-Koordinaten von Start und Ziel und gegebenenfalls von Zwischenzielen in eine Navigationseinrichtung einzulesen.

Demgegenüber liegt der Erfindung die Aufgabe zugrunde, eine überall sowohl im Stadtverkehr als auch bei Überlandfahrten verwendbare und eine individuelle Auswahl der Fahrstrecke bis zum Fahrtziel vor Fahrtantritt anhand von üblichen Landkarten ermöglichende, gattungsgemäße Fahrzeugleiteinrichtung zu schaffen, die relativ klein und handlich sowie einfach zu bedienen ist.

Erfindungsgemäß wird diese Aufgabe durch die kennzeichnenden Merkmale des Patentanspruchs 1 gelöst.

Durch die erfindungsgemäß ausgebildete Eingabevorrichtung wird es dem Fahrer vor Fahrtantritt ermöglicht, die ausgewählte Fahrstrecke, zerlegt in einzelne Streckenabschnitte gleicher Richtung, und die an den Abbiegepunkten erforderliche Richtungsänderung in die Mikroprozessoreinheit der Fahrzeugleiteinrichtung einzugeben. Dabei ermöglicht die erfindungsgemäße Ausbildung des für die Erfassung von Fahrtrichtungsänderungen vorgesehenen Winkelrasters, daß mit der Größe der Fahrtrichtungsänderung gleichzeitig eingegeben werden kann, ob diese nach rechts oder nach links zu erfolgen hat.

Nachdem die Fahrtstreckeninformationen gespeichert sind, berechnet die Mikroprozessoreinheit aus den gespeicherten Daten und den von der Wegmeßvorrichtung stammenden Angaben über die zurückgelegte Wegstrecke die Entfernung bis zum nächsten Abbiegepunkt. Diese Entfernung und die am nächsten Abbiegepunkt erforderliche Fahrtrichtungsänderung wird dann stets durch die Anzeigeeinheit dem Fahrer optisch dargestellt.

Bei einer konstruktiv besonders einfachen und kostengünstig zu fertigenden Fahrzeugleiteinrichtung ist vorgesehen, daß das Linear- und das Winkelraster der aus durchsichtigem Material bestehenden Aufnahmeschablone als optisches Strichraster ausgebildet ist und daß der Lesestift eine erste, dem Linearraster zugeordnete und eine zweite, dem Winkelraster zugeordnete optische Erfassungsvorrichtung aufweist. Derartige optische Strichraster, lassen sich einfach und mit großer Genauigkeit herstellen und abtasten, wodurch eine nur von der verwendeten Landkarte abhängende hohe Genauigkeit der eingegebenen Fahrtstreckeninformationen erzielt wird.

Um die Handhabung der erfindungsgemäß vorgesehenen Eingabevorrichtung weiter zu vereinfachen, ist vorgesehen, daß jede optische Erfassungsvorrichtung eine Lichtleitfaser umfaßt, deren im Bereich der Lesestiftspitze befindliche Eingangsseite den entsprechenden Raster und deren Ausgangsseite je einem photoelektrischen Empfänger zugeordnet ist. Durch die erfindungsgemäß vorgesehenen Lichtleitfasern ist es möglich, die photoempfindlichen Empfänger nicht unmittelbar in der Lesestiftspitze anzuordnen, so daß dem Lesestift eine ergonomisch günstige Form gegeben werden kann, die dem Benutzer das Abtasten der Raster auf der Aufnahmeschablone erleichtert.

Ein weiteres Ausführungsbeispiel der Erfindung zeichnet sich dadurch aus, daß die erste, eine lichtdicht abgedeckte Stirnfläche aufweisende Lichtleitfaser mit ihrer eingangsseitigen Mantelfläche und die zweite Lichtleitfaser mit ihrer eingangsseitigen Stirnfläche am jeweils zugeordneten Raster entlangführbar ist. Durch die erfindungsgemäß vorgesehene unterschiedliche Einkopplung des Lichts in die Lichtleitfasern wird eine eventuelle gegenseitige Störung weitgehend vermieden.

Um die von den Rastern erzeugten Lichtimpulse, die den photoelektrischen Empfängern zugeführt werden, besonders einfach in entsprechende elektrische Signale umsetzen zu können, die von der Mikroprozessoreinheit verarbeitet werden können, ist vorgesehen, daß die beiden photoempfindlichen Empfänger durch je einen in einem eigenen Spannungsteiler angeordneten Phototransistor gebildet sind, wobei die Mittelabgriffe der Spannungsteiler der Eingabesteuerschaltung zugeführt sind, die die Fahrstreckeninformationen entsprechenden Signale verarbeitet und zum Abspeichern der Mikroprozessoreinheit zuführt.

Eine weitere Ausführungsform der Erfindung wird dadurch geschaffen, daß die Aufnahmeschablone ein Schiebestück aufweist, das mit der Spitze des Lesestifts verbindbar ist, wobei das Schiebestück gegenüber der Aufnahmeschablone unverdrehbar ist. Durch das erfindungsgemäße Schiebestück wird es ermöglicht, die Lesestiftspitze beim Abtasten insbesondere des Linearrasters stets im gleichen Abstand dazu zu halten, wodurch Schwankungen der beim Abtasten erzeugten Lichtimpulse weitgehend vermieden werden. Es läßt sich hierdurch eine besonders einfache und trotzdem zuverlässige Verarbeitung der Lichtimpulse erzielen.

Um auch eine möglichst einfache und präzise Abtastung des Winkelrasters zu gewährleisten, ist vorgesehen, daß die erste, aus der Lesestiftspitze herausragende Lichtleitfaser in ein Loch des Schiebestücks einsetzbar ist, wobei der Lesestift um die Längsachse des im Loch angeordneten Abschnitts der ersten Lichtleitfaser drehbar ist. Die Verbindung der Lesestiftspitze mit dem Schiebestück wird hierbei auf besonders vorteilhafte Weise sowohl für die Führung der ersten Lichtleitfaser beim Abtasten des Linearrasters als auch zur radialen Führung der zweiten Lichtleitfaser beim Abtasten des Radialgitters ausgenutzt.

Besonders vorteilhaft ist es hierbei, daß die im Loch angeordnete, erste Lichtleitfaser mittels des Schiebestücks am Linearraster vorbeiführbar ist, wobei die Längsachse des aus der Lesestiftspitze herausragenden Abschnitts der ersten Lichtleitfaser parallel zu den einzelnen Rasterstrichen des Linearrasters gehalten ist, wodurch sich bei der Abtastung des Linearrasters besonders scharfe Lichtimpulse erzielen lassen.

Um darüber hinaus den Einfluß von Streu- und Störlicht weitgehend auszuschließen, ist vorgesehen, daß die Innenwand des Lochs bis auf einen dem Linearraster benachbarten Bereich lichtundurchlässig ist, so daß ein Lesefenster gebildet ist.

Ein weiteres Ausführungsbeispiel der Erfindung wird dadurch geschaffen, daß das Winkelraster konzentrisch zum Loch des Schiebestücks angeordnet ist, wobei der radiale Abstand der Rasterstriche vom Loch dem Abstand der zweiten, mit seiner Stirnfläche bündig mit der Stirnfläche des Lesestifts abschließenden Lichtleitfaser von der ersten Lichtleitfaser entspricht, wodurch die von den einzelnen einander entsprechenden Rasterstrichen des Radialrasters stets gleichförmige Impulse erzeugen.

Um die Fahrstrecke zwischen zwei Abbiegepunkten besonders genau ermitteln zu können, ist vorgesehen, daß die Lage des Loches zur Aufnahmeschablone in einer Endstellung des Schiebestücks mit einem Fadenkreuz markiert ist.

Bei einer weiteren Ausführungsform der Erfindung ist vorgesehen, daß an der Aufnahmeschablone ein zweites Linearraster angebracht ist, das mit der zweiten Lichtleitfaser abtastbar ist, um so die Anzahl der einer bestimmten Entfernung entsprechenden Rasterstriche einzugeben. Hierdurch läßt sich der Maßstab von standardmäßig verwendeten Landkarten mit gleichem Maßstab jeweils vor Beginn der Eingabe der Fahrtstreckeninformationen besonders einfach und unproblematisch in die erfindungsgemäße Fahrzeugleiteinrichtung eingeben. Es ist dabei besonders vorteilhaft, daß nicht auf jeder einzelnen Landkarte ein Hilfsraster angebracht werden muß, das dem Linearraster entspricht und dessen Länge der Länge eines Kilometers auf der Landkarte gleich ist.

Um die Eingabe der Fahrstreckeninformationen in Ruhe und auch außerhalb des Fahrzeugs vornehmen zu können, ist bei einem besonders bevorzugten Ausführungsbeispiel der Erfindung vorgesehen, daß die mit der Mikroprozessoreinheit zu einer mobilen Geräteeinheit mit einer eigenen Spannungsquelle zusammengefaßte Eingabevorrichtung über zumindest eine Steckerverbindung mit einer im Fahrzeug installierten Geräteeinheit, die die Anzeigeeinheit, die Wegmeßeinrichtung und die manuelle Steuervorrichtung umfaßt, verbunden ist, so daß die Eingabevorrichtung innerhalb und außerhalb des Fahrzeugs verwendbar ist. Um stets die Betriebsbereitschaft der mobilen Geräteeinheit sicherzustellen, ist vorgesehen, daß die Spannungsquelle der mobilen Geräteeinheit durch einen Akkumulator gebildet ist, der, wenn die mobile mit der fahrzeugfesten Geräteeinheit verbunden ist, über eine Fahrzeugbatterie wieder aufladbar ist. Hierdurch wird auf einfache Weise erreicht, daß der als Spannungsquelle für die mobile Geräteeinheit verwendete Akkumulator stets aufgeladen ist, wenn die mobile Geräteeinheit von der festen Geräteeinheit im Fahrzeug getrennt wird.

Bei einem weiteren bevorzugten Ausführungsbeispiel der Erfindung ist vorgesehen, daß die manuelle Steuervorrichtung eine erste und eine zweite Synchrontaste umfaßt, die einen in der Mikroprozessoreinheit vorgesehenen Adressenzähler für die anzuzeigenden Fahrzeugleitinformationen um eins erhöht bzw. erniedrigt, so daß die angezeigten Fahrzeugleitinformationen an den aktuellen Fahrzeugstandort anpaßbar sind. Durch die erfindungsgemäß vorgesehenen Synchrontasten, wird es dem Fahrer ermöglicht, die angezeigten Fahrzeugleitinformationen an den aktuellen Fahrzeugstandort anzupassen, wenn er feststellt, daß beispielsweise infolge einer ungenauen Eingabe oder aufgrund von in der verwendeten Landkarte noch nicht erkennbaren Streckenänderungen die Fahrzeugleitinformationen nicht mehr zutreffend sind. Dies ist auch besonders dann von Vorteil, wenn der Fahrer aufgrund der aktuellen Verkehrssituation sich entschließt, die Fahrtstrecke teilweise zu ändern. Hierbei braucht er dann nicht vollständig auf die eingegebenen Fahrtstreckeninformationen zu verzichten.

Um den Fahrer bei einer eventuellen Fahrtwiederholung ein erneutes Betätigen der Synchrontasten zu ersparen, ist bei einem besonders bevorzugten Ausführungsbeispiel der Erfindung vorgesehen, daß die erste Synchrontaste mit einer in der Mikroprozessoreinheit vorgesehenen und an den Datenspeicher angeschlossenen Rechenschaltung verbunden ist, die auf einen Synchronimpuls hin die tatsächlich gefahrene Wegstrecke berechnet und dem Datenspeicher zuführt. Hierdurch ist es ermöglicht, daß Abweichungen der gespeicherten Fahrzeugleitinformationen von der tatsächlich zu fahrenden Strecke korrigiert und an die tatsächlich vorhandenen Gegebenheiten angepaßt werden.

Um für den häufig vorkommenden Fall, daß der Fahrer vom Zielort die gleiche Strecke zum Ausgangspunkt zurückfahren will, nicht die Eingabe der Fahrtstreckeninformationen in umgekehrter Reihenfolge wiederholen zu müssen, ist vorgesehen, daß die manuelle Steuervorrichtung eine Umkehrtaste aufweist, mit der die Abrufreihenfolge der eingegebenen Fahrstreckeninformationen umkehrbar ist.

Ein weiteres Ausführungsbeispiel der Erfindung zeichnet sich dadurch aus, daß die manuelle Steuervorrichtung eine erste und eine zweite Einzelimpulstaste aufweist, die die Mikroprozessoreinheit so beaufschlagt, daß die angezeigte Entfernung um eine Entfernungseinheit erhöht bzw. erniedrigt wird. Durch die beiden Einzelimpulstasten wird es ermöglicht, daß die angezeigte Entfernung zum nächsten Abbiegepunkt an die tatsächliche Entfernung angepaßt wird, wenn der Fahrer erkennt, daß Unstimmigkeiten in der Entfernungsangabe aufgetreten sind.

Die Erfindung wird im folgenden beispielsweise anhand der Zeichnung beschrieben; in dieser zeigt:

Fig. 1     ein schematisches Blockschaltbild einer Vorrichtung zur Anzeige der Fahrtstrecke,

Fig. 2     eine teilweise geschnittene Draufsicht auf einen zur Eingabevorrichtung gehörenden Lesestift,

Fig. 3     ein Schaltbild einer bevorzugten Lesestiftschaltung

Fig. 4     eine Draufsicht auf eine Fahrstreckenaufnahmeschablone,

Fig. 5     einen Schnitt im wesentlichen nach Linie V - V in Fig. 4, wobei die Spitze des Lesestifts nach Fig. 2 in die Aufnahmeschablone eingesetzt ist und

Fig. 6     eine vergrößerte schematische Draufsicht auf das Schiebeteil der Aufnahmeschablone nach Fig. 4.

In den verschiedenen Figuren der Zeichnung bezeichnen gleiche Bezugszeichen einander entsprechende Teile.

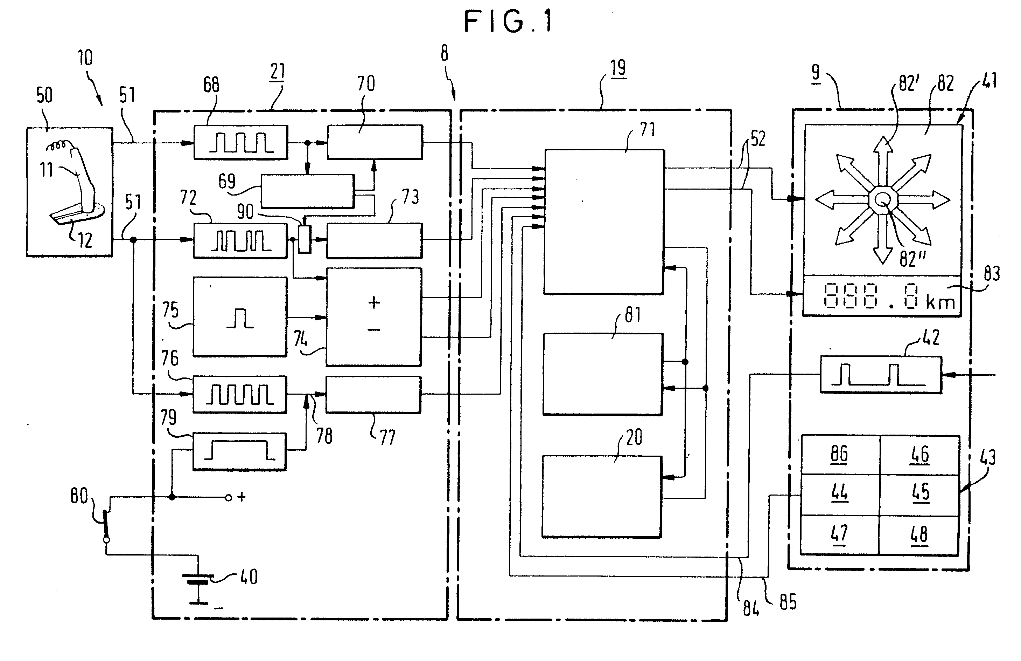

Nach Fig. 1 ist eine Fahrtstreckenaufnahmeeinheit 50, die einen Lesestift 11 und eine Aufnahmeschablone 12 besitzt, über Leitungen 51 mit einer Eingabesteuerschaltung 21 der Eingabevorrichtung 10 verbunden, die ihrerseits an eine Mikroprozessoreinheit 19 angeschlossen ist, mit der sie zusammen eine Geräteeinheit 8 bildet. Die Ausgangssignale der Mikroprozessoreinheit 19 werden über weitere Leitungen 52 zu einer Anzeigeeinheit 41 geführt, die zusammen mit einer manuellen Steuervorrichtung 43 eine fest in einem Fahrzeug installierte zweite Geräteeinheit 9 bildet.

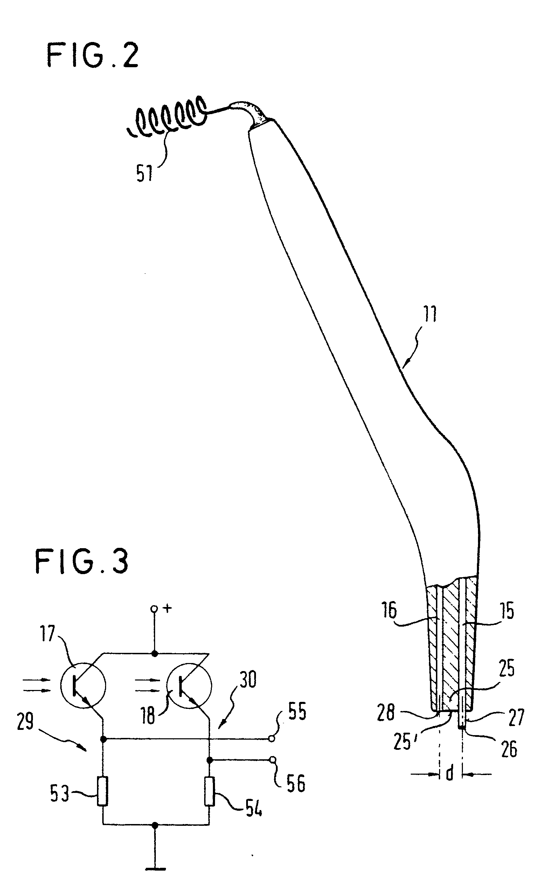

Der Lesestift 11 weist nach Fig. 2 einen ersten Lichtleiter 15 auf, der aus der Lesestiftspitze 25 vorsteht und dessen Stirnfläche 26 mit einer lichtundurchlässigen Schicht abgedeckt ist, so daß Licht in den ersten Lichtleiter 15 nur durch dessen Mantelfläche 27 eindringen kann. Ein zweiter Lichtleiter 16 schließt mit seiner Stirnfläche 28 bündig mit der Stirnfläche 25' der Lesestiftspitze 25 ab, so daß Licht nur über seine Stirnfläche 28 eingekoppelt werden kann. Jeder Lichtleiter 15 bzw. 16 beaufschlagt einen Phototransistor 17 bzw. 18. Die Phototransistoren 17 und 18 sind auf einer im Innern des Lesestifts 11 vorgesehenen, nicht dargestellten Leiterplatte angeordnet, deren prinzipielle Schaltung in Fig. 3 dargestellt ist. Der erste Phototransistor 17 ist mit seinem Kollektoranschluß mit dem positiven Pol eines Akkumulators 40 verbunden, sein Emitteranschluß liegt über einen Widerstand 53 an Masse. Der Phototransistor 17 und der Widerstand 53 bilden zusammen einen Spannungsteiler 29, dessen Mittelabgriff 55 mit der Eingabesteuerschaltung 21 verbunden ist. In gleicher Weise bildet der Phototransistor 18 zusammen mit einem Widerstand 54 einen zweiten Spannungsteiler 30, der parallel zum Phototransistor 17 und zum Widerstand 53 geschaltet ist. Der Mittelabgriff 56 des zweiten Spannungsteilers 30 ist ebenfalls mit der Eingabesteuerschaltung 21 über eine der Leitungen 51 verbunden.

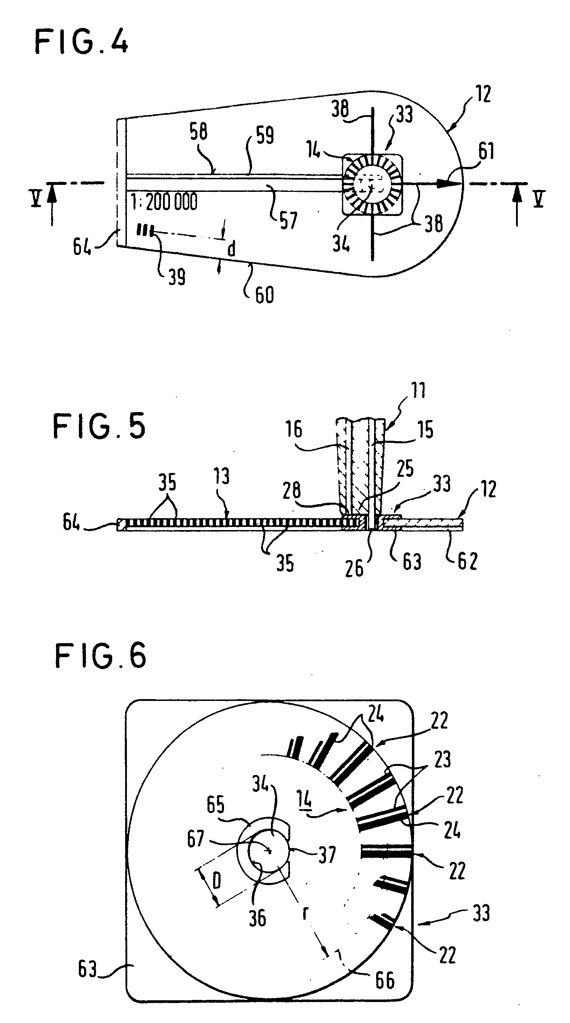

Die zur Fahrtstreckenaufnahmeeinheit 50 gehörende Aufnahmeschablone 12 weist, wie in Fig. 4 und 5 gezeigt, einen Schlitz 57 auf, in dem ein Schiebestück 33 geführt ist. Der Schlitz 57 trägt an einer seiner Innenwände 58 einen Streifen 59, auf dem ein Linearraster 13 mit senkrecht zur Schablonenebene verlaufenden Rasterstrichen 35 vorgesehen ist. Auf der Oberseite der Aufnahmeschablone 12 ist ein zweites Linearraster 39 parallel zu einer Außenkante 60 angebracht. Die Länge des zweiten Linearrasters 39 entspricht der Strecke eines Kilometers auf einer Landkarte mit einem bevorzugten Maßstab, der neben dem zweiten Linearraster 39 angegeben ist. An einem Ende der Aufnahmeschablone 12 ist ein Faden-kreuz 38 vorgesehen, das die vordere Endstellung des Schiebestückes 33 im Schlitz 57 markiert. Einer der Balken erstreckt sich in Längsrichtung des Schlitzes 57 und trägt an seinem vorderen Ende eine Pfeilspitze 61. Auf der Unterseite der Aufnahmeschablone 12 ist eine parallel zum Schlitz 57 verlaufende und symmetrisch zu diesem angeordnete Nut 62 vorgesehen, in der die Bodenplatte 63 des Schiebestückes 33 läuft. An dem vom Fadenkreuz 38 abgewandten Ende der Schablone 12 ist ein Schlitz 57 in Längsrichtung verschließender Steg 64 befestigt, um ein Herausfallen des Schiebestücks 33 zu verhindern.

Das Schiebestück 33, auf dessen Oberseite ein Winkelraster 14 vorgesehen ist, weist ein Loch 34 auf, dessen Längsrichtung sich im wesentlichen senkrecht zur Ebene der Aufnahmeschablone 12 erstreckt. Die Innenwand 36 des Lochs 34 ist mit einer lichtundurchlässigen Verkleidung 65 versehen, so daß ein Lesefenster 37 gebildet ist. Die einzelnen Rasterstriche 22 des Winkelrasters 14 werden jeweils aus einem ersten, schmalen Strich 23 und einem zweiten, breiten Strich 24 gebildet, wobei die umfangsmäßige Reihenfolge von schmalem Strich 23 und breitem Strich 24 bei allen Rasterstrichen 22 identisch ist. Der radiale Abstand r der umfangsmäßigen Mittellinie 66 des Winkelrasters 14 vom Mittelpunkt 67 des Loches 34 ist dabei so gewählt, daß er dem Abstand d der beiden Lichtleiter 15, 16 voneinander entspricht. Der Durchmesser D des Loches 34 ist auf die Dicke des ersten Lichtleiters 15 abgestimmt, so daß dieser, wie in Fig. 5 dargestellt, in das Loch 34 eingesteckt werden kann, so daß sich das Schiebestück 33 mittels des Lesestifts 11 im Schlitz 57 verschieben läßt.

Wird das Schiebestück 33 mittels des in das Loch 34 eingesetzten Lichtleiters 15 am Linearraster 13 vorbeigeschoben, so entstehen am Lesefenster 37 Hell-Dunkel-Impulse, die vom Lichtleiter 15 an den zugeordneten Phototransistor 17 weitergeleitet werden. Der Phototransistor 17 ändert im Rhythmus der Lichtschwankungen den Widerstand seiner Kollektor-Emitter-Strecke, so daß am Mittelabgriff 55 den Lichtschwankungen entsprechende Spannungsimpulse auftreten. In gleicher Weise werden die Hell-Dunkel-Schwankungen, die beim Abtasten des Winkelrasters 14 mit dem zweiten Lichtleiter 16 an dessen Stirnfläche 28 vorliegen, in Spannungsimpulse umgesetzt, die am Mittelabgriff 56 des zweiten Spannungsteilers 30 abgegriffen werden können.

Beim Abtasten des Winkelrasters 14 mit dem zweiten Lichtleiter 16 wird der erste, in das Loch 34 des Schiebestücks 33 eingesetzte Lichtleiter 15 als Drehachse benutzt. Auch bei der Abtastung des zweiten Linearrasters 39 mittels des zweiten Lichtleiters 16 dient der erste Lichtleiter 15 als Führungsteil, das an der Kante 60 der Aufnahmeschablone 12 entlanggeführt wird, so daß der zweite Lichtleiter 16 entlang der Längsmittellinie des zweiten Linearrasters 39 dieses abtastet.

Die an den Mittelabgriffen 55, 56 des ersten bzw. zweiten Spannungsteilers 29 bzw. 30 anstehenden elektrischen Signale werden nach Fig. 1 über die Leitungen 51 der Eingabesteuerschaltung 21 zugeführt, die eine erste Kippstufe 68 aufweist, deren Eingang mit dem Mittelabgriff 55 des ersten Spannungsteilers 29 verbunden ist. Der Ausgang der Kippstufe 68 ist an einen Eingang einer Auswahlschaltung 69 und an einen Eingang eines ersten Zählers 70 angelegt, dessen Rückstelleingang von der Auswahlschaltung 69 beaufschlagt wird. Der Ausgang des ersten Zählers 70 ist an einen ersten Eingang einer Ein- und Ausgabeschnittstelle 71 der Mikroprozessoreinheit 19 angeschlossen.

Eine zweite als Schmitt-Trigger ausgebildete Kippstufe 72 ist mit ihrem Eingang mit dem Mittelabgriff 56 des zweiten Spannungsteilers 30 verbunden. Der Ausgang der zweiten Kippstufe 72 ist über eine von der Auswahlschaltung 69 beaufschlagte Torschaltung 90 an einen zweiten Zähler 73 und an eine Vorzeichenerzeugungsschaltung 74 angelegt. Ein weiterer Eingang der Vorzeichenerzeugungsschaltung 74 wird von einer Zeitstufe 75 mit einer Vergleichszeit beaufschlagt, um festzustellen, ob bei einem zu zählenden, einem Rasterstrich 22 entsprechenden, doppelten Impuls zuerst ein kurzer oder ein langer Impuls aufgetreten ist. Der Ausgang des zweiten Zählers 73 sowie zwei Ausgänge der Vorzeichenerfassungsschaltung 74 sind an entsprechende Eingänge der Ein- und Ausgabeschnittstelle 71 angelegt.

Der Mittelabgriff 56 des zweiten Spannungsteilers 30 ist ferner an den Eingang einer dritten Kippstufe 76 angeschlossen, deren Ausgang einem dritten Zähler 77 über eine Verbindungsleitung 78 zugeführt ist. In die Verbindungsleitung 78 mündet der Ausgang einer zweiten Zeitstufe 79, deren Eingang über einen Hauptschalter 80 mit dem Akkumulator 40 verbunden ist. Der Ausgang des dritten Zählers 77 ist wiederum mit einem entsprechenden Eingang der Ein- und Ausgabeschnittstelle 71 verbunden.

Ein Ausgang der Ein- und Ausgabeschnittstelle 71 ist mit einer zentralen Steuereinheit 81 der Mikroprozessoreinheit 19 verbunden. Die Mikroprozessoreinheit 19 weist ferner einen Datenspeicher 20 auf, der von der zentralen Steuereinheit 81 beaufschlagt wird.

Ein zweiter und ein dritter Ausgang der Ein- und Ausgabeschnittstelle 71 ist über Leitungen 52 mit der Anzeigeeinheit 41 verbunden, so daß die am zweiten bzw. dritten Ausgang der Ein- und Ausgabeeinheit 71 anstehenden Signale die Fahrtrichtungsanzeige 82 bzw. die numerische Entfernungsanzeige 83 beaufschlagen.

Die fest im Fahrzeug eingebaute Geräteeinheit 9 umfaßt außerdem eine Wegmeßeinrichtung 42, die vom nicht dargestellten Tachometer des Fahrzeugs beaufschlagt wird und die der zurückgelegten Wegstrecke entsprechende Impulssignale über eine Leitung 84 an die Ein- und Ausgabeschnittstelle 71 der Mikroprozessoreinheit 19 liefert.

Eine der fahrzeugfesten Geräteeinheit 9 zugeordnete, manuelle Steuervorrichtung 43 umfaßt eine Starttaste 86, eine erste und eine zweite Synchrontaste 44 bzw. 45, eine Umkehrtaste 46 sowie eine erste und eine zweite Einzelimpulstaste 47, 48, mit denen Impulse erzeugt werden können, die über eine Leitung 85 der Ein- und Ausgabeschnittstelle 71 der Mikroprozessoreinheit 19 zugeführt werden, um dem Benutzer die Möglichkeit zu geben, die von der Fahrzeugleiteinrichtung gegebenen Wegstreckeninformationen entsprechend dem aktuellen Fahrtablauf zu beeinflussen.

Im folgenden wird die Arbeitsweise der Fahrzeugleiteinrichtung beschrieben:

Um die ausgewählte Fahrstrecke von der Landkarte in die Fahrzeugleiteinrichtung einzugeben, wird zuerst der Hauptschalter 80 betätigt, so daß die mobile Geräteeinheit 8 vom Akkumulator 40 mit Spannung versorgt ist. Nach dem Schließen des Hauptschalters 80 kann das auf der Aufnahmeschablone 12 vorgesehene zweite Linearraster 39 mit dem zweiten Lichtleiter 16 abgetastet werden, so daß der vom zweiten Lichtleiter 16 beaufschlagte Spannungsteiler 30 an seinem Mittelabgriff 56 Spannungsimpulse über eine der Leitungen 51 an die Eingabesteuerschaltung 21 liefert. Diese Spannungsimpulse werden von der dritten Kippstufe 76 in Rechteckimpulse umgeformt und dem dritten Zähler 77 zugeführt, der innerhalb von einer durch die Zeitstufe 79 vorgegebenen Zeit nach dem Einschalten des Hauptschalters 80 diese Impulse zählt und am Ende der vorgegebenen Zeit die Anzahl der einem Kilometer entsprechenden Impulse an die Mikroprozessoreinheit 19 weitergibt, in deren Datenspeicher 20 dieser Wert gespeichert wird. Anschließend wird die Aufnahmeschablone 12 mit dem Fadenkreuz 38 auf den Ausgangspunkt der ausgewählten Fahrtstrecke auf der Landkarte gelegt. Es wird dann das Schiebestück 33 in seine vorderste Position geschoben, wobei sich das Loch 34 im Zentrum des Fadenkreuzes 38 befindet. Nachdem der erste Lichtleiter 15 in das Loch 34 des Schiebestücks 33 eingesetzt ist, wird die Aufnahmeschablone in Richtung der zu fahrenden Strecke verschoben, bis das Fadenkreuz 38 genau über dem ersten Abbiegepunkt liegt. Hierbei wird das Linearraster 13 ein erstesmal abgetastet. Das Schiebestück 33 kann jetzt bis in seine vorderste Position verschoben werden, wobei das Linearraster 13 ein zweitesmal vom Lichtleiter 15 abgetastet wird.

Die bei den beiden Abtastvorgängen vom ersten Spannungsteiler 29 erzeugten und an die erste Kippstufe 68 gelieferten Spannungsimpulse werden von der Kippstufe 68 in Rechteckimpulse umgeformt und der Auswahlschaltung 69 sowie dem ersten Zähler 70 zugeführt. Die Auswahlschaltung 69 erzeugt mittels einer vorgegebenen Vergleichszeit Zählblöcke, die den einzelnen Abtastvorgängen zugeordnet sind. Ein in der Auswahlschaltung 69 vorgesehener Frequenzteiler erfaßt jeweils den zweiten Zählblock und startet bei dessen Beginn den Zähler 70, während beim Ende eines zweiten Zählblocks die im Zähler 70 anstehende Anzahl von Impulsen über die Ein- und Ausgabeschnittstelle 71 der Mikroprozessoreinheit 19 zugeführt wird, in der dieser Wert mit der bereits gespeicherten Anzahl von Impulsen pro Kilometer verglichen und in einen Kilometerwert umgerechnet wird, der mit einer Adresse "n" versehen im Datenspeicher 20 gespeichert wird.

Beim Ende des zweiten Zählblocks öffnet die Auswahlschaltung 69 die Torschaltung 90.

Nachdem die Entfernung vom Startpunkt im Datenspeicher 20 unter der Adresse n = 1 gespeichert und die Torschaltung 90 geöffnet ist, wird die Aufnahmeschablone 12 auf der kürzesten Weg so gedreht, daß der Pfeil 61 des Fadenkreuzes 38 wieder in die Richtung der weiterhin zu befahrenden Straße zeigt. Hierbei wird das Winkelraster 14 an der Stirnfläche 28 des zweiten Lichtleiters 16 vorbeigeführt, so daß das Winkelraster 14 abgetastet wird. Die durch diese Abtastung entstehenden Impulse, die am Mittelabgriff 56 des zweiten Spannungsteilers 30 anstehen, werden der zweiten Kippstufe 72 zugeführt, die diese Impulse in Rechteckimpulse umwandelt und sowohl der Vorzeichenerzeugungsschaltung 74 als auch über die offene Torschaltung 90 dem zweiten Zähler 73 zuführt. In der Vorzeichenerzeugungsschaltung 74, der von der Zeitstufe 75 ein Vergleichsimpuls mit konstanter Länge zugeführt wird, wird festgestellt, ob in einem Doppelimpuls zuerst ein kurzer oder zuerst ein langer Einzelimpuls auftritt. Im ersten Fall, d.h. wenn die Aufnahmeschablone 12 nach links gedreht wurde, wird ein Minuszeichen erzeugt und zum Beginn eines nächsten ersten Zählblocks zusammen mit dem Ausgangssignal des zweiten Zählers 73 über die Ein- und Ausgabeschnittstelle 71 der Mikroprozessoreinheit 19 zugeführt. Die Auswahlschaltung 69 schließt nun die Torschaltung 90, um das Zählen weiterer Winkelimpulse während der folgenden Abtastung des Linearrasters 13 zu verhindern. In der zentralen Steuereinheit 81 der Mikroprozessoreinheit 19 wird der Abbiegewinkel errechnet und zusammen mit dem dazugehörigen Vorzeichen unter der Adresse n = 1 in einem den Winkelwerten zugeordneten Bereich des Datenspeichers 20 gespeichert.

Als nächstes wird dann die Entfernung bis zum nächsten Abbiegepunkt aufgenommen, wo wiederum durch Schwenken der Aufnahmeschablone 12 die Abbiegerichtung und der zugehörige Winkel ermittelt werden. Auf diese Art und Weise wird die gesamte ausgewählte Fahrtstrecke aufgenommen und im Datenspeicher 20 der Mikroprozessoreinheit 19 gespeichert. Nach der Aufnahme des letzten Streckenabschnitts zum Zielpunkt braucht kein Abbiegewinkel mehr aufgenommen zu werden, und daher wird für den letzten Abbiegewinkel der Wert Null gespeichert.

Bei langen Strecken in einer Richtung besteht die Möglichkeit, diese in Teilabschnitte zu zerlegen. Die Teilabschitte zu zerlegen. Die Teilabschnitte werden dann ebenso aufgenommen und abgespeichert wie ein Streckenabschnitt zwischen zwei Abbiegepunkten. Als Abbiegewert wird dann 0 abgespeichert, was Geradeausfahrt bedeutet. Hierdurch lassen sich besonders markante Punkte festhalten, auch wenn an diesen Punkten ein Abbiegen nicht erforderlich ist.

Soll auf der geplanten Fahrstrecke auf einer kreuzungsfreien Straße, beispielsweise einer Autobahn, nach dem Abbiegen nach links weitergefahren werden, obwohl der Abbiegevorgang tatsächlich nur nach rechts erfolgen kann, so wird beim Aufnehmen und Eingeben der Abbiegedaten die Aufnahmeschablone 12 rechtsherum geschwenkt, bis der Pfeil 61 des Fadenkreuzes 38 wieder in Fahrtrichtung zeigt. Der so ermittelte Abbiegewinkel ist größer als 180°. Daher wird beim Anzeigen der Abbiegedaten durch eine Windrose 82' der graphischen Richtungsanzeigevorrichtung 82 der richtige Abbiegewinkel angezeigt. Um jedoch darauf hinzuweisen, daß der tatsächliche Abbiegevorgang nur nach rechts erfolgen kann, ist ein Blinklicht 82'' in der Mitte der Windrose 82' vorgesehen, das dann in diesem Falle aufleuchtet.

Nachdem die Fahrstrecke aufgenommen wurde und die mobile Geräteeinheit 8 wieder über die Leitungen 52, 84, 85 mit der fahrzeugfesten Geräteeinheit 9 verbunden ist, wird zu Fahrtantritt die Starttaste 86 der manuellen Steuervorrichtung 43 betätigt. Daraufhin übernimmt die zentrale Steuervorrichtung 81 die unter der Adresse n = 1 abgespeicherten Entfernungs- und Abbiegedaten und gibt sie über die Ein- und Ausgabeschnittstelle 71 an die Anzeigeeinheit 41 weiter, wo die Entfernung von der numerischen Anzeige 83 und die Abbiegerichtung von der Windrose 82' angezeigt werden. Während der Fahrt erzeugt die Wegmeßvorrichtung 42 entsprechend der zurückgelegten Wegstrecke Impulse, die beispielsweise jeweils einem Kilometer entsprechen und die vom angezeigten Entfernungswert abgezogen werden. Die so ermittelte, verbleibende Entfernung zum nächsten Abbiegepunkt wird dem Fahrer ständig von der numerischen Anzeige 83 mitgeteilt. Nachdem der Abbiegepunkt erreicht wurde, d.h. die angezeigte Entfernung gleich 0 km ist, wird die Adresse n um eins erhöht und die Entfernung zum nächsten Abbiegepunkt sowie der zugehörige Abbiegewinkel werden in die zentrale Recheneinheit 81 übernommen und wiederum über die Ein- und Ausgabeschnittstelle 71 der Anzeigeeinheit zugeführt und von dieser angezeigt.

Erreicht der Fahrer einen Abbiegepunkt bevor die numerische Anzeige 83 den Wert 0 km anzeigt, so kann er durch Betätigen der ersten Synchrontaste 44 die Adresse n um eins erhöhen, so daß unmittelbar nach Betätigen der ersten Synchrontaste bereits die neuen Entfernungs- und Abbiegedaten von der Anzeigeeinheit 41 angezeigt werden. Gleichzeitig wird der beim Drücken der ersten Synchrontaste 44 angezeigte Entfernungswert von dem unter der Adresse n gespeicherten Wert abgezogen. Die so berechnete, tatsächlich seit dem letzten Abbiegepunkt zurückgelegte Wegstrecke wird dann unter der Adresse n gespeichert, wobei der alte Wert überschrieben wird. Auf diese Weise wird für die Rückfahrt oder eine eventuelle Fahrtwiederholung der tatsächliche Weg festgehalten.

Zeigt andererseits die numerische Anzeige 83 eine Entfernung von 0 km zum nächsten Abbiegepunkt, wurde dieser aber noch nicht erreicht, so kann durch Betätigen der zweiten Synchrontaste 45 die Adresse n um eins erniedrigt werden, so daß die zuletzt angezeigten Werte auf der Anzeigeeinheit 41 wieder erscheinen. Da die Wegmeßeinrichtung 42 weiterhin Impulse liefert, werden jetzt negative Werte für die bis zum nächsten Abbiegepunkt zurückgelegte Wegstrecke errechnet und angezeigt. Nach Erreichen dieses Abbiegepunktes wird dann durch Betätigen der ersten Synchrontaste 44 die gespeicherte Entfernung zum nächsten Abbiegepunkt und der dazugehörige Abbiegewinkel abgerufen und mit der Anzeigeeinheit 41 dargestellt. Auch hierbei bewirkt die erste Synchrontaste 44, daß der angezeigte, negative Entfernungswert vom entsprechenden gespeicherten Wert subtrahiert wird und der berechnete Wert, der der gefahrenen, längeren Wegstrecke entspricht, gespeichert wird.

Mit der ersten und der zweiten Einzelimpulstaste 47, 48 läßt sich die angezeigte Entfernung zum nächsten Abbiegepunkt jeweils um eins erhöhen bzw. herabsetzen.

Soll auf einer kreuzungsfreien Straße am nächsten Abbiegepunkt nach links abgebogen werden, d.h. ist der für den nächsten Abbiegepunkt gespeicherte Winkel größer als 180°, so wird die Differenz zwischen dem gespeicherten Winkel und 180° berechnet, mit einem negativen Vorzeichen versehen und von einem Pfeil der Windrose 82' angezeigt. Gleichzeitig wird das Blinklicht 82'' angesteuert, so daß es den Fahrer darauf hinweist, daß nur nach rechts abgebogen werden kann. Nach Erreichen dieses Abbiegepunktes leuchtet das Blinklicht 82'' dann nicht mehr, es sei denn, auch am nächsten Abbiegepunkt muß über eine Ausfahrt von rechts nach links abgebogen werden.

Will der Fahrer nach Erreichen des Ziels die gleiche Strecke wieder zurückfahren, und wieder die gespeicherten Informationen der Fahrzeugleiteinrichtung benutzen, so braucht er nur auf die Umkehrtaste 46 zu drücken. Dadurch wird bewirkt, daß die gespeicherten Daten in der umgekehrten Reihenfolge abgerufen werden, wobei jeweils dem unter der Adresse n gespeicherten Entfernungswert der unter der Adresse n - 1 gespeicherte Winkelwert zugeordnet wird, und daß die anzuzeigenden Winkelwerte mit dem entgegengesetzten Vorzeichen versehen werden. Die unterschiedliche Abbiegerichtung wird auch auf kreuzungsfreien Straßen berücksichtigt, so daß bei einem Winkel, der größer als 180° ist, das Blinklicht 82'' auf dem Rückweg nicht mehr angesteuert wird.

## Patentansprüche

1. Fahrzeugleiteinrichtung mit einer Mikroprozessoreinheit (19), die mit einer Wegmeßvorrichtung, mit einer Anzeigeeinheit (41) für aktuelle Fahrzeugleitdaten, mit einer manuellen Steuereinrichtung (43), mit welcher die Fahrzeugleitfunktion zumindest startbar ist, sowie mit einer Eingabevorrichtung (10) verbunden ist, wobei die Eingabevorrichtung (10) die gewünschte Fahrtroute auf einer Landkarte abtastet und die Fahrstreckeninformationen in einem Datenspeicher (20) der Mikroprozessoreinheit (19) abspeichert,
dadurch gekennzeichnet,
daß die Eingabevorrichtung (10) eine Aufnahmeschablone (12) aufweist, die zur Eingabe der Entfernung zwischen zwei Punkten der Fahrstrecke, insbesondere Abbiegepunkten mit einem Lesestift (11) abgetastet wird, wobei die Aufnahmeschablone (12) ein der Entfernung zugeordnetes Linearraster (13) und ein der Fahrtrichtungsänderung zugeordnetes Winkelraster (14) trägt, dessen Rasterstriche (22) aus in Umfangsrichtung unterschiedlich breiten Strichen (23, 24) zusammengesetzt ist, deren umfangsmäßige Reihenfolge bei allen Rasterstrichen (22) gleich ist.

2. Fahrzeugleiteinrichtung nach Anspruch 1, dadurch gekennzeichnet, daß sich jeder Rasterstrich (22) aus einem schmalen und einem breiten Strich (23 bzw. 24) zusammensetzt.

3. Fahrzeugleiteinrichtung nach einem der Ansprüche 1 oder 2, dadurch gekennzeichnet, daß das Linear- und das Winkelraster (13 bzw. 14) der aus durchsichtigem Material bestehenden Aufnahmeschablone (12) als optisches Strichraster ausgebildet ist und daß der Lesestift (11) eine erste, dem Linearraster (13) zugeordnete und eine zweite, dem Winkelraster (14) zugeordnete optische Erfassungsvorrichtung (15, 17 bzw. 16, 18) aufweist.

4. Fahrzeugleiteinrichtung nach Anspruch 3, dadurch gekennzeichnet, daß jede optische Erfassungsvorrichtung eine Lichtleitfaser (15, 16) umfaßt, deren im Bereich der Lesestiftsspitze (25) befindliche Eingangsseite dem entsprechenden Raster (13 bzw. 14) und deren Ausgangsseite je einem photoelektrischen Empfänger (17 bzw. 18) zugeordnet ist.

5. Fahrzeugleiteinrichtung nach Anspruch 4, dadurch gekennzeichnet, daß die erste, eine lichtdicht abgedeckte Stirnfläche (26) aufweisende Lichtleitfaser (15) mit ihrer eingangsseitigen Mantelfläche (27) und die zweite Lichtleitfaser (16) mit ihrer eingangsseitigen Stirnfläche (28) am jeweils zugeordneten Raster (13 bzw. 14) entlangführbar ist.

6. Fahrzeugleiteinrichtung nach Anspruch 4 oder 5, dadurch gekennzeichnet, daß die beiden photoempfindlichen Empfänger durch je einen in einem eigenen Spannungsteiler (29, 30) angeordneten Phototransistor (17 bzw. 18) gebildet sind, wobei die Mittelabgriffe (55, 56) der Spannungsteiler (29 bzw. 30) der Eingabesteuerschaltung (21) zugeführt sind, die die Fahrstreckeninformationen entsprechenden Signale verarbeitet und zum Abspeichern der Mikroprozessoreinheit (19) zuführt.

7. Fahrzeugleiteinrichtung nach einem der Ansprüche 1 bis 6, dadurch gekennzeichnet, daß die Aufnahmeschablone (12) ein Schiebestück (33) aufweist, das mit der Spitze (25) des Lesestifts (11) verbindbar ist.

8. Fahrzeugleiteinrichtung nach Anspruch 7 , dadurch gekennzeichnet, daß das Schiebestück (33) gegenüber der Aufnahmeschablone (12) unverdrehbar ist.

9. Fahrzeugleiteinrichtung nach Anspruch 7 oder 8 , dadurch gekennzeichnet, daß die erste, aus der Lesestiftspitze (25) herausragende Lichtleitfaser (15) in ein Loch (34) des Schiebestücks (33) einsetzbar ist.

10. Fahrzeugleiteinrichtung nach Anspruch 9 , dadurch gekennzeichnet, daß der Lesestift (11) um die Längsachse des im Loch (34) angeordneten Abschnitts der ersten Lichtleitfaser (15) drehbar ist.

11. Fahrzeugleiteinrichtung nach Anspruch 9 oder 10 , dadurch gekennzeichnet, daß die im Loch (34) angeordnete, erste Lichtleitfaser (15) mittels des Schiebestücks (33) am Linearraster (13) vorbeiführbar ist, wobei die Längsachse des aus der Lesestiftspitze (25) herausragenden Abschnitts der ersten Lichtleitfaser (15) parallel zu den einzelnen Rasterstrichen (35) des Linearrasters (13) gehalten ist.

12. Fahrzeugleiteinrichtung nach einem der Ansprüche 9, 10 oder 11, dadurch gekennzeichnet, daß die Innenwand (36) des Lochs (34) bis auf einen dem Linearraster (13) benachbarten Bereich lichtundurchlässig ist, so daß ein Lesefenster (37) gebildet ist.

13. Fahrzeugleiteinrichtung nach einem der Ansprüche 9 bis 12, dadurch gekennzeichnet, daß das Winkelraster (14) konzentrisch zum Loch (34) des Schiebestücks (33) angeordnet ist, wobei der radiale Abstand r der Rasterstriche (22) vom Loch (34) dem Abstand r der zweiten, mit seiner Stirnfläche (28) bündig mit der Stirnfläche (25') des Lesestifts (11) abschließenden Lichtleitfaser (16) von der ersten Lichtleitfaser (15) entspricht.

14. Fahrzeugleiteinrichtung nach einem der Ansprüche 9 bis 13, dadurch gekennzeichnet, daß die Lage des Loches (34) zur Aufnahmeschablone (12) in einer Endstellung des Schiebestücks (33) mit einem Fadenkreuz (38) markiert ist.

15. Fahrzeugleiteinrichtung nach einem der Ansprüche 1 bis 14,

dadurch gekennzeichnet, daß an der Aufnahmeschablone (12) ein zweites Linearraster (39) angebracht ist, das mit der zweiten Lichtleitfaser (16) abtastbar ist, um so die Anzahl der einer bestimmten Entfernung entsprechenden Rasterstriche einzugeben.

16. Fahrzeugleiteinrichtung nach einem der vorhergehenden Ansprüche, dadurch gekennzeichnet, daß die mit der Mikroprozessoreinheit (19) zu einer mobilen Geräteeinheit (8) mit einer eigenen Spannungsquelle (40) zusammengefaßte Eingabevorrichtung (10) über zumindest eine Steckerverbindung mit einer im Fahrzeug eingebauten Geräteeinheit (9), die die Anzeigeeinheit (41), die Wegmeßeinrichtung (42) und die manuelle Steuervorrichtung (43) umfaßt, verbunden ist, so daß die Eingabevorrichtung (10) innerhalb und außerhalb des Fahrzeugs verwendbar ist.

17. Fahrzeugleiteinrichtung nach Anspruch 16, dadurch gekennzeichnet, daß die Spannungsquelle der mobilen Geräteeinheit (8) durch einen Akkumulator (40) gebildet ist, der, wenn die mobile mit der fahrzeugfesten Geräteeinheit (8 bzw. 9) verbunden ist, über eine Fahrzeugbatterie wieder aufladbar ist.

18. Fahrzeugleiteinrichtung nach Anspruch 16 oder 17, dadurch gekennzeichnet, daß die manuelle Steuervorrichtung (43) eine erste und eine zweite Synchrontaste (44 bzw. 45) umfaßt, die einen in der Mikroprozessoreinheit (19) vorgesehenen Adressenzähler für die anzuzeigenden Fahrzeugleitinformationen um eins erhöht bzw. erniedrigt, so daß die angezeigten Fahrzeugleitinformationen an den aktuellen Fahrzeugstandort anpaßbar sind.

19. Fahrzeugleiteinrichtung nach Anspruch 16, 17 oder 18 , dadurch gekennzeichnet, daß die erste Synchrontaste (44) mit einer in der Mikroprozessoreinheit (19) vorgesehenen und an den Datenspeicher (20) angeschlossenen Rechenschaltung verbunden ist, die auf einen Synchronimpuls hin die tatsächlich gefahrene Wegstrecke berechnet und dem Datenspeicher (20) zuführt.

20. Fahrzeugleiteinrichtung nach einem der Ansprüche 16 bis 19, dadurch gekennzeichnet, daß die manuelle Steuervorrichtung (43) eine Umkehrtaste (46) aufweist, mit der die Abrufreihenfolge der eingegebenen Fahrstreckeninformationen umkehrbar ist.

21. Fahrzeugleiteinrichtung nach einem der Ansprüche 16 bis 20,
dadurch gekennzeichnet, daß die manuelle Steuervorrichtung (43) eine erste und eine zweite Einzelimpulstaste (47 bzw. 48) aufweist, die die Mikroprozessoreinheit (19) so beaufschlagt, daß die angezeigte Entfernung um eine Entfernungseinheit erhöht bzw. erniedrigt wird.

**Claims**

1. Vehicle pilot device with a microprocessor unit (19) which is connected to an odometer, to a display unit (41) for current vehicle pilot data, to a manual control device (43) with which the vehicle pilot function can be at least started, and to an input device (10), wherein the input device (10) scans the desired route on a map and stores the route data in a memory (20) of the microprocessor unit (19), characterised in that the input device (10) comprises a recording template (12) which is scanned with a reading pen (11) for input of the distance between two points of the route, in particular turn-off points, wherein the recording template (12) bears a linear pattern (13) associated with the distance and an angular pattern (14) which is associated with the change of direction and of which the pattern lines (22) are composed of lines (23, 24) which differ in width in the circumferential direction and of which the circumferential sequence is the same for all pattern lines (22).

2. Vehicle pilot device according to claim 1, characterised in that each pattern line (22) is composed of a narrow line (23) and a wide line (24).

3. Vehicle pilot device according to either of claims 1 or 2, characterised in that the linear and angular patterns (13 and 14) of the recording template (12), which is made of transparent material, are designed as optical line patterns and that the reading pen (11) comprises a first optical detection device (15, 17) associated with the linear pattern (13) and a second optical detection device (16, 18) associated with the angular pattern (14).

4. Vehicle pilot device according to claim 3, characterised in that each optical detection device includes an optical fibre (15, 16), of which the input end located in the region of the tip (25) of the reading pen is associated with the corresponding pattern (13 or 14) and of which the output end is in each case associated with a photoelectric receiver (17 or 18).

5. Vehicle pilot device according to claim 4, characterised in that the first optical fibre (15), which comprises an end face (26) covered to exclude light, is guided by the peripheral surface (27) at its input end, and the second optical fibre (16) is guided by its input end face (28), along the respectively associated pattern (13 or 14).

6. Vehicle pilot device according to claim 4 or 5, characterised in that the two photosensitive receivers are each formed by a phototransistor (17 or 18) arranged in a separate voltage divider (29, 30), wherein the centre taps (55, 56) of the voltage dividers (29 or 30) are connected to the input control circuit (21) which processes the signals corresponding to route data and delivers them to the microprocessor unit (19) for storage.

7. Vehicle pilot device according to any of claims 1 to 6, characterised in that the recording template (12) comprises a sliding piece (33) which can be connected to the tip (25) of the reading pen (11).

8. Vehicle pilot device according to claim 7, characterised in that the sliding piece (33) is non-rotatable relative to the recording template (12).

9. Vehicle pilot device according to claim 7 or 8, characterised in that the first optical fibre (15), which protrudes out of the tip (25) of the reading pen, can be inserted in a hole (34) in the sliding piece (33).

10. Vehicle pilot device according to claim 9, characterised in that the reading pin (11) is rotatable about the longitudinal axis of the section of the first optical fibre (15) disposed in the hole (34).

11. Vehicle pilot device according to claim 9 or 10, characterised in that the first optical fibre (15) disposed in the hole (34) can be guided past the linear pattern (13) by means of the sliding piece (33), wherein the longitudinal axis of the section of the first optical fibre (15) protruding from the tip (25) of the reading pen is kept parallel to the individual lines (35) of the linear pattern (13).

12. Vehicle pilot device according to any of claims 9, 10 or 11, characterised in that the inner wall (36) of the hole (34) is impervious to light except for a region adjacent to the linear pattern (13), so that a reading window (37) is formed.

13. Vehicle pilot device according to any of claims 9 to 12, characterised in that the angular pattern (14) is arranged concentrically to the hole (34) in the sliding piece (33), wherein the radial distance r of the pattern lines (22) from the hole (34) corresponds to the distance r of the second optical fibre (16), of which the end face (28) lies flush with the end face (25') of the reading pen (11), from the first optical fibre (15).

14. Vehicle pilot device according to any of claims 9 to 13, characterised in that the position of the hole (34) relative to the recording template (12) is marked with cross hairs (38) in an end position of the sliding piece (33).

15. Vehicle pilot device according to any of claims 1 to 14, characterised in that on the recording template (12) is arranged a second linear pattern (39) which can be scanned with the second optical fibre (16), in order thus to enter the number of pattern lines corresponding to a certain distance.

16. Vehicle pilot device according to any of the preceding claims, characterised in that the input device (10), which is combined with the microprocessor unit (19) into a mobile instrument unit (8) with its own voltage source (40), is connected by at least one plug connection to an instrument unit (9) which is installed in the vehicle and which includes the display unit (41), the odometer (42) and the manual control device (43), so that the input device (10) can be used inside and outside the vehicle.

17. Vehicle pilot device according to claim 16, characterised in that the voltage source of the mobile instrument unit (8) is formed by an accumulator (40) which, when the mobile instrument unit (8) is connected to the one (9) fixed to the vehicle, is rechargeable by means of a vehicle battery.

18. Vehicle pilot device according to claim 16 or 17, characterised in that the manual control device (43) includes first and second synchronising keys (44 and 45) which increase or decrease by one an address counter provided in the microprocessor unit (19) for the vehicle pilot data to be indicated, so that the vehicle pilot data indicated can be adapted to the current location of the vehicle.

19. Vehicle pilot device according to claim 16, 17 or 18, characterised in that the first synchronising key (44) is connected to a computing circuit which is provided in the microprocessor unit (19) and connected to the memory (20) and which, upon a synchronising pulse, calculates the distance actually travelled and delivers it to the memory (20).

20. Vehicle pilot device according to any of claims 16 to 19, characterised in that the manual control device (43) comprises a reverse key (46) with which the order of calling up the input route data can be reversed.

21. Vehicle pilot device according to any of claims 16 to 20, characterised in that the manual control device (43) comprises first and second single-pulse keys (47 and 48) which act on the microprocessor unit (19) in such a way that the indicated distance is increased or decreased by one unit of distance.

## Revendications

1. Dispositif de guidage d'un véhicule, comportant une unité-microprocesseur (19) qui est reliée à un dispositif de mesure de distance, à une unité d'affichage (41) des données actuelles de guidage du véhicule, à un dispositif de commande manuelle (43) avec lequel on peut au moins lancer la fonction de guidage du véhicule, ainsi qu'à un dispositif d'introduction de données (10), ce dispositif d'introduction de données (10) lisant la route désirée sur une carte et stockant des informations relatives au parcours dans une mémoire de données (20) de l'unité-microprocesseur (19),
caractérisé
par le fait que le dispositif d'introduction de données (10) présente un gabarit de saisie (12) qui, pour introduire les données de distance entre deux points du parcours, notamment entre des points de changement de direction, est lu par un lecteur (11), le gabarit de saisie (12) portant une trame linéaire (13) affectée à la distance et une trame angulaire (14) affectée au changement de direction, dont les traits (22) sont composés de traits (23, 24) ayant des largeurs différentes en direction circonférentielle, leur séquence circonférentielle étant la même pour tous les traits de trame (22).

2. Dispositif de guidage d'un véhicule selon revendication 1,
caractérisé par le fait que chaque trait de trame (22) se compose d'un trait étroit et d'un trait large (respectivement 23 et 24).

3. Dispositif de guidage d'un véhicule selon l'une des revendications 1 ou 2, caractérisé par le fait que la trame linéaire et la trame angulaire (respectivement 13, 14) du gabarit de saisie (12) fait en un matériau transparent sont réalisées en tant que trames optiques à traits, et par le fait que le lecteur (11) présente un premier et un deuxième dispositif de lecture (15, 17; 16, 18), lesquels sont respectivement affectés à la trame linéaire (13) et à la trame angulaire (14).

4. Dispositif de guidage d'un véhicule selon revendication 3, caractérisé par le fait que chaque dispositif de lecture optique comporte une fibre optique (15, 16) dont le côté entrée se trouvant dans la région de la pointe du lecteur (25) est conjugué à la trame correspondante (13; 14) et dont le côté sortie est conjugué à chaque fois à un récepteur photoélectrique correspondant (17; 18).

5. Dispositif de guidage d'un véhicule selon revendication 4, caractérisé par le fait que la première fibre optique (15), dont la surface terminale (26) est munie d'un masque étanche à la lumière, est déplacée, par sa surface périphérique côté entrée (27), le long de la trame qui lui est conjuguée (13), et la deuxième fibre optique (16) est déplacée, par sa surface terminale située côté entrée (28) le long de la trame qui lui est conjuguée (14).

6. Dispositif de guidage d'un véhicule selon revendication 4 ou 5, caractérisé par le fait que les deux récepteurs photosensibles sont constitués chacun par un phototransistor (17; 18) agencé dans un diviseur de tension qui lui est propre (29, 30), les prises médianes (55, 56) des diviseurs de tension respectifs (29, 30) étant reliées au circuit de commande d'entrée de données (21), lequel traite les signaux correspondant aux informations du parcours et les transmet à l'unité-microprocesseur (19) pour la mise en mémoire.

7. Dispositif de guidage d'un véhicule selon l'une des revendications 1 à 6, caractérisé par le fait que le gabarit de saisie (12) présente un curseur (33) qui peut être lié à la pointe (25) du lecteur (11).

8. Dispositif de guidage d'un véhicule selon revendication 7, caractérisé par le fait que le curseur (33) ne peut pas tourner par rapport au gabarit de saisie (12).

9. Dispositif de guidage d'un véhicule selon revendication 7 ou 8, caractérisé par le fait que la première fibre optique (15), dépassant hors de la pointe (25) du lecteur, peut être introduite dans un trou (34) du curseur (33).

10. Dispositif de guidage d'un véhicule selon revendication 9, caractérisé par le fait que le lecteur (11) peut tourner autour de l'axe longitudinal de la portion de la première fibre optique (15) placée dans le trou (34).

11. Dispositif de guidage d'un véhicule selon revendication 9 ou 10, caractérisé par le fait que la première fibre optique (15) placée dans le trou (34) peut être déplacée, au moyen du curseur (33), devant la trame linéaire (13), l'axe longitudinal de la portion de la première fibre optique (15) faisant saillie hors de la pointe (25) du lecteur étant maintenu parallèle aux traits individuels (35) de la trame linéaire (13).

12. Dispositif de guidage d'un véhicule selon l'une des revendications 9, 10 ou 11, caractérisé par le fait que la paroi interne (36) du trou (34) est opaque à l'exception d'une région voisine de la trame linéaire (13), de manière à former une fenêtre de lecture (37).

13. Dispositif de guidage d'un véhicule selon l'une des revendications 9 à 12, caractérisé par le fait que la trame angulaire (14) est agencée concentriquement au trou (34) du curseur (33), la distance radiale r des traits de trame (22) au trou (34) correspondant à la distance r entre la première fibre optique (15) et la deuxième fibre optique (16) dont la surface terminale (28), affleure la surface terminale (25') du lecteur (11).

14. Dispositif de guidage d'un véhicule selon l'une des revendications 9 à 13, caractérisé par le fait que la position du trou (34) par rapport au gabarit de saisie (12) est marquée par un réticule (38), dans une position extrême du curseur (33).

15. Dispositif de guidage d'un véhicule selon l'une des revendications 1 à 14, caractérisé par le fait qu'une deuxième trame linéaire (39) est aménagée sur le gabarit de saisie (12) et peut être lue par la deuxième fibre optique (16), afin d'introduire ainsi en tant que donnée le nombre des traits de trame correspondant à une distance déterminée.

16. Dispositif de guidage d'un véhicule selon l'une des revendications précédentes, caractérisé par le fait que le dispositif d'introduction de données (10), constituant avec l'unité-microprocesseur (19), un module mobile (8) ayant sa propre source de tension (40), est relié, par au moins une liaison par connecteur, à un module (9) monté dans le véhicule, ce dernier module comprenant l'unité d'affichage. (41), le dispositif de mesure de distance (42) et le dispositif de commande manuelle (43), de sorte que le dispositif d'introduction de données (10) peut être utilisé à l'intérieur et à l'extérieur du véhicule.

17. Dispositif de guidage d'un véhicule selon revendication 16, caractérisé par le fait que la source de tension du module mobile (8) est constituée par un accumulateur (40) qui, lorsque le mobile est relié ou module (8; 9) solidaire du véhicule, est rechargeable par une batterie du véhicule.

18. Dispositif de guidage d'un véhicule selon revendication 16 ou 17, caractérisé par le fait que le dispositif de commande manuelle (43) comprend une première et une deuxième touche de synchronisation (44; 45) ayant respectivement pour effet d'incrémenter et de décrémenter d'une unité un compteur d'adresse prévu dons l'unité-microprocesseur (19), pour les informations de guidage à afficher, de sorte que les informations de guidage affichées peuvent être adaptées à l'emplacement actuel du véhicule.

19. Dispositif de guidage d'un véhicule selon revendication 16, 17 ou 18, caractérisé par le fait que la première touche de synchronisation (44) est reliée à un circuit de calcul prévu dans l'unité-microprocesseur (19) et raccordé à la mémoire de données (20), ce circuit calculant, à la suite d'une impulsion de synchronisation, le trajet effectivement parcouru et le transmettant à la mémoire de données (20).

20. Dispositif de guidage d'un véhicule selon l'une des revendications 16 à 19, caractérisé par le fait que le dispositif de commande manuelle (43) présente une touche d'inversion (46) avec laquelle on peut inverser la séquence d'appel des informations de parcours introduites.

21. Dispositif de guidage d'un véhicule selon l'une des revendications 16 à 20, caractérisé par le fait que le dispositif de commande manuelle (43) présente une première et une deuxième touche d'impulsion individuelle (47; 48) qui attaque l'unité-microprocesseur (19) de manière que la distance affichée soit augmentée ou diminuée d'une unité de distance.

# FIG.1

EP 0 197 321 B1

# FIG.2

51

11

16    15

28    25

25'    27

26

d

# FIG.3

17

30

18

29    55

53    56

54

# FIG.4

1 : 200 000

# FIG.5

# FIG.6